# EUROPEAN PATENT APPLICATION

(11) **EP 2 627 101 A1**
(43) Date of publication of application: **14.08.2013**
(21) Application number: 13154089.0
(22) Date of filing: 05.02.2013
(51) Int. Cl.: H04N 21/4782, G06F 17/30, H04N 21/81

(54) **Broadcast receiving apparatus and method of providing website accessing route using the same**

(30) Priority: 10.02.2012 KR 20120013895
(71) Applicant: Samsung Electronics Co., Ltd, Gyeonggi-do 443-742 (KR)
(72) Inventor: Hyeon, Su-gyeong, Gyeonggi-do (KR); Lee, Chang-soo, Seoul (KR)
(74) Representative: Hewett, Jonathan Michael Richard

(57) **Abstract**

A broadcast receiving apparatus and a method of providing a website accessing route using the broadcast receiving apparatus are provided. The broadcast receiving apparatus includes: a signal processing unit which performs signal processing with respect to received broadcast contents; a communicating unit which communicates with an external server to access websites; a display unit which displays the signal processed broadcast contents or the websites; and a controlling unit which provides links to a plurality of websites regarding a plurality of categories based on information about previous visits or current visits of a user to the websites and, if one of the plurality of categories is selected, the controlling unit provides a link to a website corresponding to the selected category.

## Description

The present invention relates to a broadcast receiving apparatus and a method of providing a website accessing route using the same. More particularly, the present invention relates to a broadcast receiving apparatus which provides links to a plurality of websites and a method of providing a website accessing route using the same.

A broadcast receiving apparatus refers to all types of apparatuses which receive broadcasts and display the broadcasts on a screen or output the broadcasts as sound. A radio wave is generally used to receive a broadcast, but various types of technical means have been used to receive a broadcast.

A web service is provided through a wired-wireless communication network. Therefore, the web service is different from a broadcast network. However, in the future, it is expected that a broadcast network and a communication network will be unified. Therefore, a web service will be actively used through a broadcast receiving apparatus.

Interfaces of a broadcast receiving apparatus and an Internet receiving apparatus have been realized in different methods. For example, a broadcast receiving apparatus, i.e., a TV, receives a control command through a remote controller, but an Internet receiving apparatus, i.e., a PC, receives a control command through a keyboard. Therefore, since the broadcast receiving apparatus, i.e., the TV, does not include a text input unit such as a keyboard, it is expected that it will be inconvenient to use a web service provided based on a text address if web surfing is performed through the broadcast receiving apparatus.

Exemplary embodiments of the present invention provide a broadcast receiving apparatus which provides links to a plurality of websites regarding a plurality of categories based on information about previous or current visits of a user to the websites and provides a link to a website corresponding to one selected from the plurality of categories, and a method of providing a website accessing route using the same.

According to an aspect of the exemplary embodiments, there is provided a broadcast receiving apparatus which accesses a plurality of websites through a network. The broadcast receiving apparatus may include: a signal processing unit which performs signal processing with respect to received broadcast contents; a communicating unit which communicates with an external server to access the websites; a display unit which displays the signal processed broadcast contents or the websites; and a controlling unit which provides links to a plurality of respective websites, of the websites, corresponding to a plurality of categories based on information about previous visits or current visits of a user to the websites and, if one of the plurality of categories is selected, the controlling unit provides the respective links to a website corresponding to the selected category.

The plurality of categories may include a bookmark, a visit record, and a currently visited website.

If the bookmark is selected, the controlling unit may provide respective links to websites registered in the bookmark and categories other than the bookmark, together. If the visit record is selected, the controlling unit may provide respective links to previously visited websites and categories other than the visit record, together. If the currently visited website is selected, the controlling unit may provide respective links to the currently visited websites and categories other than the currently visited websites, together.

The links to the plurality of respective websites may be provided in a thumbnail form or a list form.

The links to the plurality of respective websites may be provided in one of date, name, and visit frequency orders.

If one of the plurality of categories is selected, the controlling unit may further provide an input window through which a website address is input.

According to another aspect of the exemplary embodiments, there is provided a method of providing a website accessing route. The method may include: receiving broadcast contents or websites; displaying the received broadcast contents or websites; and providing links to a plurality of respective websites, of websites, corresponding to a plurality of categories based on information about previous visits or current visits of a user to the websites and, if one of the plurality of categories is selected, providing the respective links to the website corresponding to the selected category.

The plurality of categories may include a bookmark, a visit record, and a currently visited website.

The providing of the links to the websites may include: if the bookmark is selected, providing respective links to websites registered in the bookmark and categories other than the bookmark, together; if the visit record is selected, providing respective links to previously visited websites and categories other than the visit record, together; and if the currently visited website is selected, providing respective links to the currently visited websites and categories other than the currently visited website, together.

The links to the plurality of respective websites may be provided in a thumbnail form or a list form.

The links to the plurality of respective websites may be provided in one of date, name, and visit frequency orders.

The providing of the links to the websites may include: if one of the plurality of categories is selected, further providing an input window through which a website address is input.

According to a further aspect of exemplary embodiments, there is provided a broadcast receiving apparatus which accesses websites through a network. The broadcast receiving apparatus may include: a receiver which receives broadcast contents through a broadcast network and the websites from a web server through the internet; a video processor which performs signal processing with respect to video data of the received broadcast contents; an audio processor which performs signal processing with respect to audio data of the received broadcast contents; a display unit which displays the signal processed audio and video data or the websites; and a controlling unit which provides links to a plurality of websites regarding a plurality of categories based on information about previous visits or currents visits of a user to the websites, and if one of the plurality of categories is selected, the controlling unit provides a link to a website corresponding to the selected category.

According to the above-described various exemplary embodiments, links to a plurality of websites may be provided according to a plurality of categories based on information about previous or current visits of a user to the websites. If one of the plurality of categories is selected, a link to the website corresponding to the selected category may be provided. Therefore, a user may be conveniently provided with a web service through a broadcast receiving apparatus.

The above and/or other aspects will be more apparent by describing certain exemplary embodiments with reference to the accompanying drawings, in which:
FIG. 1 is a block diagram illustrating a structure of a broadcast receiving apparatus according to various exemplary embodiments;
FIG. 2 is a block diagram illustrating a structure of a broadcast receiving apparatus according to various exemplary embodiments;
FIG. 3 is a referential view illustrating a screen of a broadcast receiving apparatus which displays a plurality of categories, according to various exemplary embodiments;
FIG. 4 is a referential view illustrating the screen of the broadcast receiving apparatus of FIG. 3 on which a bookmark category is selected;
FIG. 5 is a referential view illustrating the screen of the broadcast receiving apparatus of FIG. 3 on which a visit record category is selected;
FIG. 6 is a referential view illustrating the screen of the broadcast receiving apparatus of FIG. 3 on which a currently visited website is selected;
FIG. 7 is a referential view illustrating the screen of the broadcast receiving apparatus of FIG. 4 which further displays an input window;
FIG. 8 is a flowchart illustrating a method of providing a website accessing route according to various exemplary embodiments;
FIG. 9 is a flowchart illustrating a method of providing a website accessing route according to various exemplary embodiments;
FIG. 10 is a referential view illustrating a screen of a broadcast receiving apparatus which displays a plurality of categories through a web browser, according to various exemplary embodiments;
FIG. 11 is a referential view illustrating the screen of the broadcast receiving apparatus of FIG. 10 on which a bookmark category is selected;
FIG. 12 is a referential view illustrating the screen of the broadcast receiving apparatus of FIG. 10 on which a visit record category is selected;
FIG. 13 is a referential view illustrating the screen of the broadcast receiving apparatus of FIG. 10 on which a currently visited website category is selected; and
FIG. 14 is a referential view illustrating a part of a screen of a broadcast receiving apparatus which displays a list of currently visited websites, according to various exemplary embodiments.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

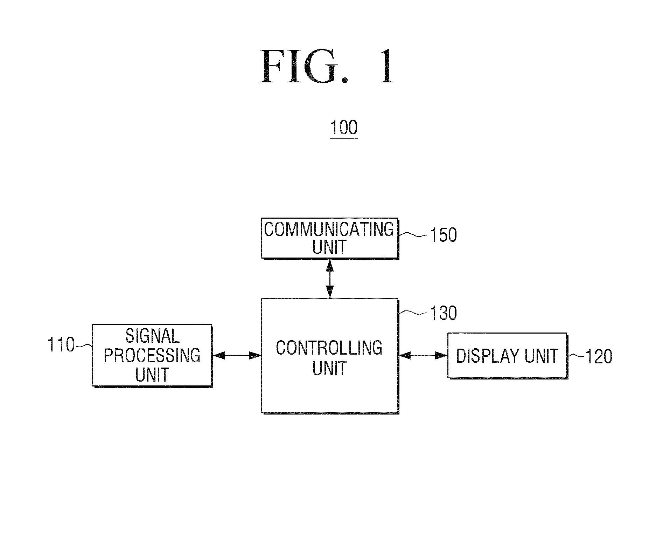

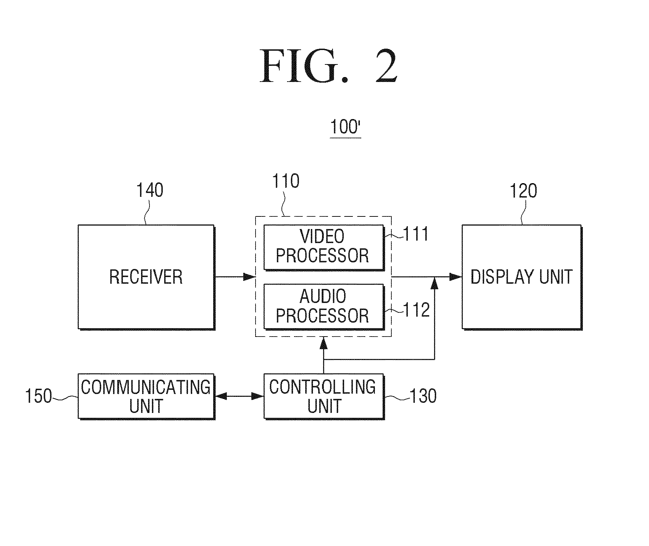

FIG. 1 is a block diagram illustrating a structure of a broadcast receiving apparatus 100 according to various exemplary embodiments. FIG. 2 is a block diagram illustrating a structure of a broadcast receiving apparatus 100 according to various exemplary embodiments.

Referring to FIG. 1, the broadcast receiving apparatus 100 includes a signal processing unit 110, a display unit 120, a controlling unit 130, and a communicating unit 150. The signal processing unit 110 performs signal processing with respect to received broadcast contents. The display unit 120 displays the signal processed broadcast contents or websites. The controlling unit 130 controls to provide a plurality of categories, including links to websites based on information about user visits to the websites. The communicating unit 150 communicates with an external server.

The signal processing unit 110 processes video and audio signals to display the received contents. In other words, the signal processing unit 110 performs signal processing with respect to video data of the received contents to decode the video data and performs signal processing with respect to audio data of the received contents to decode the audio data.

The communicating unit 150 is an element which communicates with the external server. In more detail, the communicating unit 150 is an interface which is connected to the external server through a wire or wireless communication network to transmit and receive data related to the websites. In other words, the communicating unit 150 transmits a web service request of the broadcast receiving apparatus 100 to the external server. The external server provides the websites or receives response data from the websites and transmits the response data to the broadcast receiving apparatus 100. The broadcast receiving apparatus 100 according to the various exemplary embodiments may receive the above-described broadcast contents through a wired-wireless communication network. Besides information about websites, the communicating unit 150 receives broadcast contents.

The display unit 120 is an element which displays the signal processed broadcast contents or the websites on a screen. For example, the display unit 120 may include a liquid crystal display (LCD) panel (not shown) which displays an image, a backlight unit (not shown) which supplies a light source to the LCD panel, and a display driving circuit (not shown) which drives the display unit 120. An operation of the display unit 120 is controlled by the controlling unit 130. In other words, the controlling unit 130 drives the backlight unit to supply the light source to the LCD panel and applies the signal processed broadcast contents as a voltage to the LCD panel through the display driving circuit. As a result, the display unit 120 displays the received broadcast contents or the websites on the screen. If the broadcast receiving apparatus 100 according to the various exemplary embodiments includes a web browser, and the web browser is executed, the display unit 120 applies an image voltage of the web browser to the LCD panel through the display driving circuit to display the web browser on the screen.

The controlling unit 130 is an element which controls an overall operation of the broadcast receiving apparatus 100. In particular, the controlling unit 130 may control the display unit 120 to provide links to a plurality of websites regarding a plurality of categories based on information about previous or current visits of a user to the websites. Links to the plurality websites are provided based on the previous or current visits of the user to the websites. Links are provided because the broadcast receiving apparatus 100 has an interface limit. In other words, since the broadcast receiving apparatus 100, i.e., a TV does not generally include a text input unit for character units , i.e., a keyboard, it is inconvenient to use a web service through the broadcast receiving apparatus 100. The web service is based on a text address. Therefore, according to embodiments, links to a plurality of websites are provided according to a plurality of categories based on information about user visits to the websites. Therefore, revisits to the websites are possible without a text input unit. In detail, if one of the plurality of categories is selected, the controlling unit 130 may control the display unit 120 to provide a link to the website corresponding to the selected category

Referring to FIG. 2, the broadcast receiving apparatus 100 according to the various exemplary embodiments may further include a receiver 140. Also, the signal processing unit 110 may include a video processor 111 which processes a video signal of the received contents and an audio processor 112 which processes an audio signal of the received contents.

The receiver 140 is an element which receives transmitted broadcast contents. The transmission of the broadcast contents may be performed through various means. For example, the receiver 140 may receive broadcast program contents from a broadcasting station through a broadcast network and may receive a content file from a web server through the Internet. In the exemplary embodiment in which the broadcast program contents are received from the broadcasting station through the broadcast network, the receiver 140 may include a tuner (not shown) which tunes a frequency, a demodulator which detects a signal corresponding to contents from the received frequency, and an equalizer (not shown) which corrects a characteristic of the frequency. In the exemplary embodiment in which the content file is received from the web server through the Internet, the receiver 140 may be included in the communicating unit 150 which has described in the previous exemplary embodiment. However, the embodiments do not exclude other exemplary embodiments except the above method of describing the receiver 140.

The video processor 111 performs signal processing with respect to video data of the received contents. In detail, the video processor 111 may include a decoder (not shown) which performs decoding with respect to the video data and a scaler (not shown) which performs upscaling or downscaling according to a size of the screen of the display unit 120.

The audio processor 112 performs signal processing with respect to the audio data of the received contents. For this purpose, the audio processor 112 may include a decoder (not shown) which performs decoding with respect to the audio data. The audio data, which has been decoded by the decoder, is amplified and then output through an audio output unit (not shown).

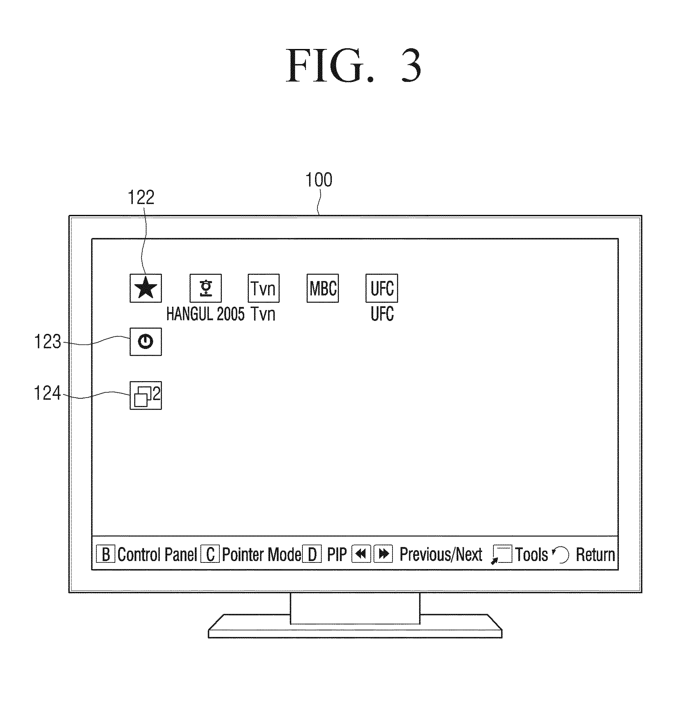

FIG. 3 is a referential view illustrating a screen of the broadcast receiving apparatus 100 which displays a plurality of categories according to various exemplary embodiments.

As described above, the controlling unit 130 provides links to a plurality of websites regarding a plurality of categories based on information about previous or current user visits to the websites. The categories may be one of a bookmark 122, a visit record 123, and a currently visited website 124. As shown in FIG. 3, according to an exemplary embodiment, the categories may be displayed as icons on the display unit 120 of the broadcast receiving apparatus 100. However, the categories may be displayed as menu icons or may be displayed by other methods. In other words, methods of displaying categories are not limited.

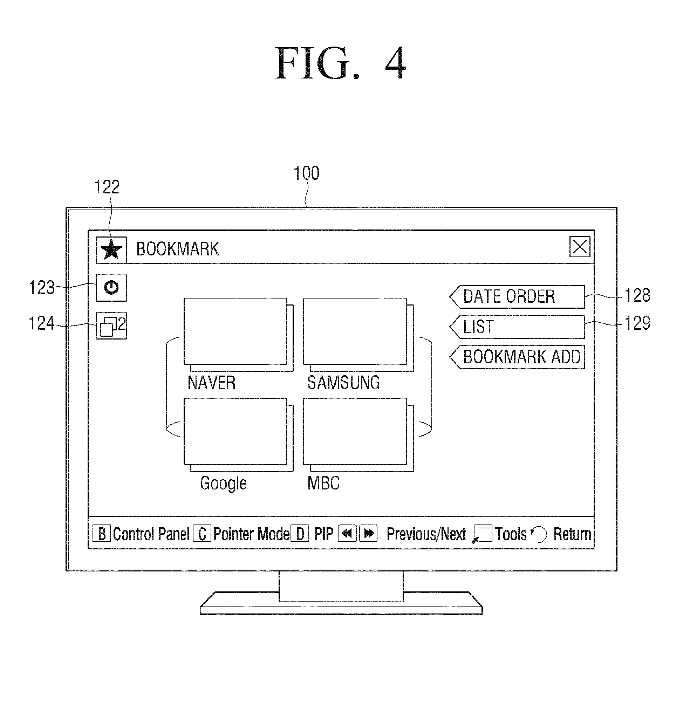

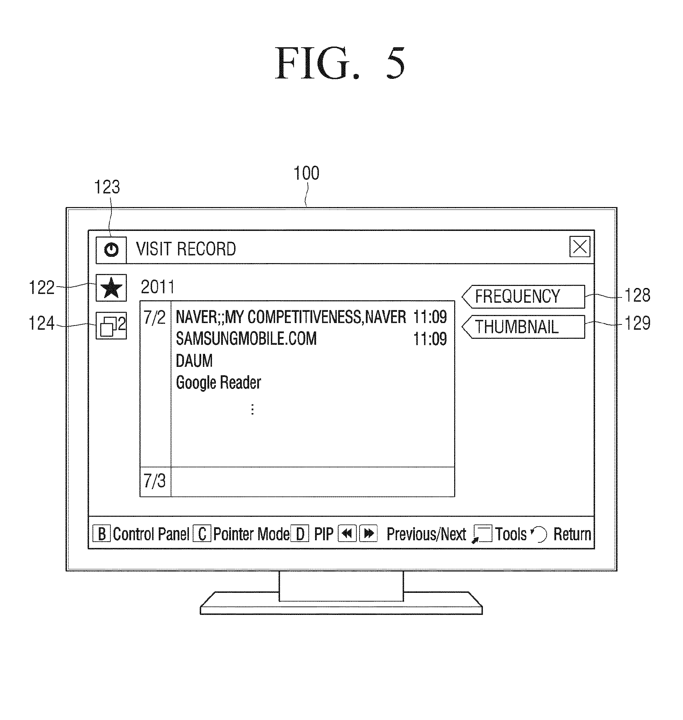

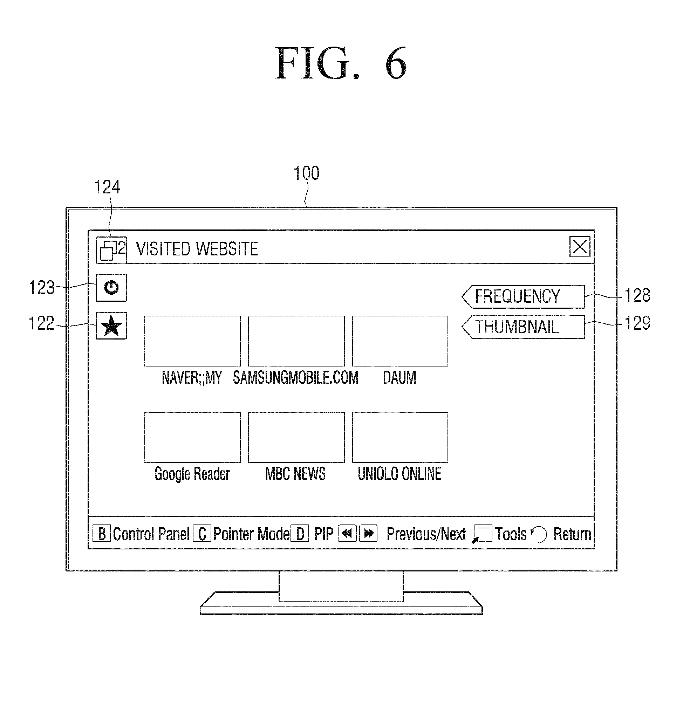

FIG. 4 is a referential view illustrating the screen of the broadcast receiving apparatus 100 of FIG. 3 on which a bookmark category is selected. FIG. 5 is a referential view illustrating the screen of the broadcast receiving apparatus 100 of FIG. 3 on which a visit record category is selected. FIG. 6 is a referential view illustrating the screen of the broadcast receiving apparatus 100 of FIG. 3 on which a currently visited website category is selected.

If the user selects a bookmark category, the controlling unit 130 may control the display unit 120 to provide links to websites registered in a bookmark and other categories. The websites registered in the bookmark refer to particular websites which have been visited by the user. Thus, the websites are registered in the bookmark. Therefore, the links to the websites registered in the bookmark are based on information about previous visits to the websites. Also, if the user selects a visit record category, the controlling unit 130 may control the display unit 120 to provide the links to the websites which have been visited by the user and categories other than the visit record. If the user selects a currently visited website, the controlling unit 130 may control the display unit 120 to provide the currently visited website and categories other than the currently visited website. The currently visited website refers to a website, which is being currently accessed by the broadcast receiving apparatus 100, but is not displayed on the screen. Therefore, the link to the website provided through the currently visited website is based on information about a current visit to the website.

As shown in FIG. 4, if the bookmark category 122 is selected, websites "www.naver.com", "www.samsungmobile.com", and "www.daum.net" registered in the bookmark on the screen by the user are displayed with other categories. In FIG. 5, the visit record category 123 is selected. In this case, the links to the websites which have been visited by the user, a visit record, and other categories are displayed together. In FIG. 6, if a currently visited website category is selected, a link to the currently visited website is displayed along with other categories. Other types of categories are displayed together because links to websites corresponding to categories and other categories are provided to allow a user to conveniently access a website. Thus, this embodiment overcomes the interface limit of the broadcast receiving apparatus 100 described above.

A method of selecting a category on the screen of the broadcast receiving apparatus 100 according to an exemplary embodiment will now be described.

As described above, a category may be provided in an icon form. In this case, the icon operates as an interface which transmits a control command to the broadcast receiving apparatus 100. In other words, if the user selects an icon, the controlling unit 130 provides a link to a website of a category corresponding to the icon. The user may select an icon (i.e., a category) by using various methods. For example, the user may select a category through a remote controller. In this case, the remote controller may select a category providing a link to a website and may provide a general means which selects or executes various types of icons or applications displayed on the screen of the broadcast receiving apparatus 100. For example, the remote controller may provide a function of moving a pointer on the screen in order to select or execute a particular icon or application. The remote controller may also provide a function of changing an activation position on the screen without the pointer to select or execute an icon or an application. In the former case, the user moves the pointer up, down, and to the left and right through a direction button of the remote controller. The user may move the pointer onto an icon or an application that the user desires to select or execute and may select or execute the corresponding icon or application through a selection or execution button (not shown) of the remote controller. The controlling unit 130 activates a function corresponding to the selected or executed icon or application.

In the latter case, the user may change the activation position on the screen through the direction button of the remote controller. For example, the user may change the activation position from a currently activated part of the screen to a right side part of the screen through a right direction button. In this case, an icon or application displayed on the corresponding screen is in a selectable or executable state. If a selection or execution command is input through the selection or execution button of the remote controller, the icon or application on the currently activated part of the screen is selected or executed, and the controlling unit 130 activates a function corresponding to the icon or application. In the exemplary embodiment, if a particular category is selected through the remote controller by using the above-described method, the controlling unit 130 controls the display unit 120 to display a link to a website corresponding to the selected category and other categories together.

In the exemplary embodiment of FIGS. 3 through 6, the broadcast receiving apparatus 100 provides two different types of input modes 127. Button "C" of the remote controller is used to change an input mode 127. For example, whenever the button "C" is pressed, an input mode for selecting a current menu icon is changed to another input mode. In the exemplary embodiment of FIGS. 3 through 6, the current input mode is a pointer mode.

The links to the plurality of websites displayed on the display unit 120 may be displayed in various forms, i.e., a thumbnail form, a list form, etc. The thumbnail form refers to a form which enumerates and displays a list of websites in a small image form of a screen of a website. In FIG. 4, if the bookmark category 122 is selected, links to several websites registered in a bookmark by the user are provided as thumbnail forms. The list form refers to a form which enumerates and displays links to websites in a sentence form summarizing titles or contents of the websites. In FIG. 5, if the visit record category 123 is selected, links to websites which have been visited by the user are provided as a list form. The broadcast receiving apparatus 100 according to the various exemplary embodiments provides a function of displaying links to websites in a form desired by the user through a website link display form icon 129 of the screen.

The links to the websites displayed on the display unit 120 may be displayed in one of date, name, and visit frequency orders. The date order displays the links to the plurality of websites in an old visit record order or the fastest visit record order. The name order displays the links to the websites in an English alphabet order, a Korean alphabet order, or an opposite order. The visit frequency order displays the links to the websites in a visit frequency order or an order opposite to the visit frequency order. The broadcast receiving apparatus 100 according to the various exemplary embodiments provides a function of displaying the links to the websites in an order desired by the user through a website link display order icon 128 of the screen.

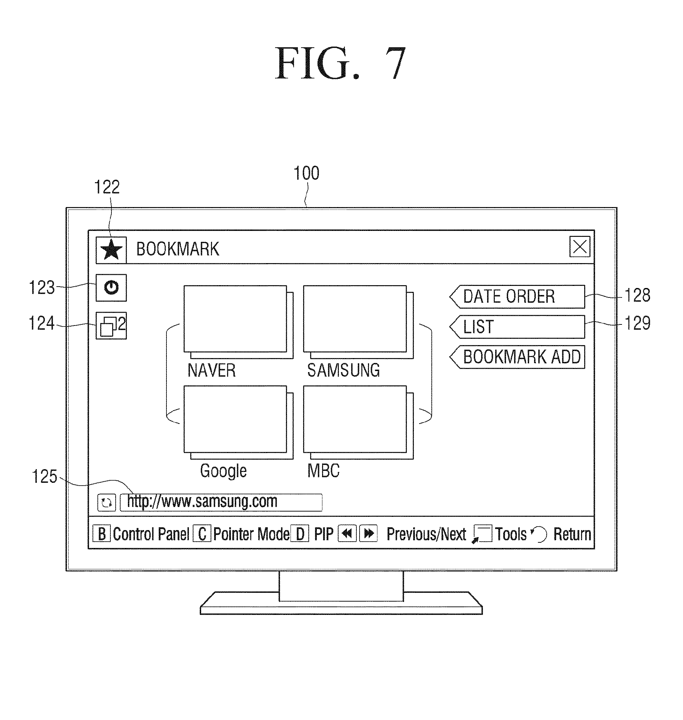

FIG. 7 is a referential view illustrating the screen of the broadcast receiving apparatus 100 of FIG. 4. FIG. 7 further displays an input window.

The user directly inputs a text address in order to move to a website that the user visits first. Therefore, if one of the plurality of categories is selected as shown in FIG. 7, the controlling unit 130 may control the display unit 120 to further provide an input window 125 for inputting a website address. An input of a new website may be performed through the remote controller or through an additional input unit. In the former case, a keypad may be displayed on the screen, and a particular key on the keypad may be selected through the remote controller to perform the input of the new website. In the latter case, the input of the new website may be performed through an additional input unit (not shown). The additional input unit is connected to the broadcast receiving apparatus 100, i.e., a keyboard, a keypad, etc.

A method of providing a website accessing route according to various exemplary embodiments will now be described with reference to the drawings.

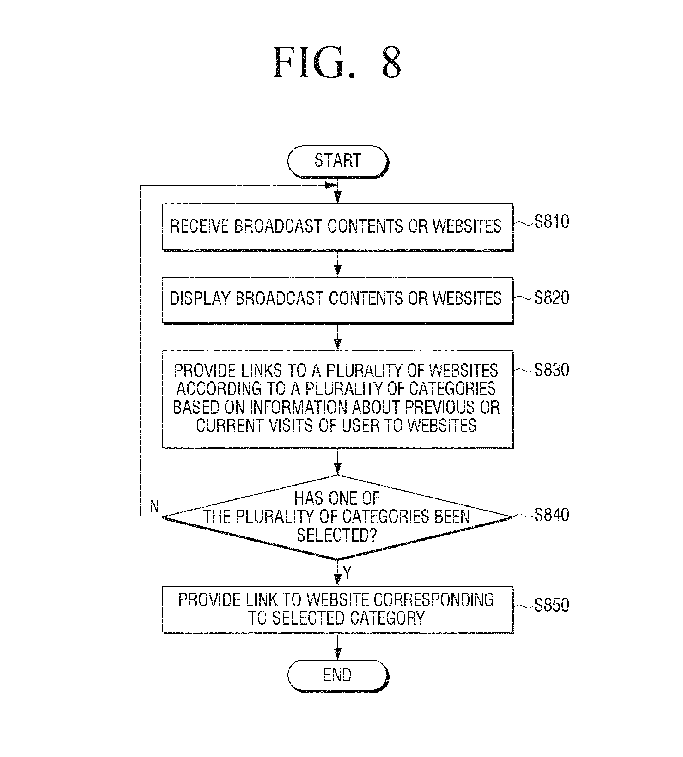

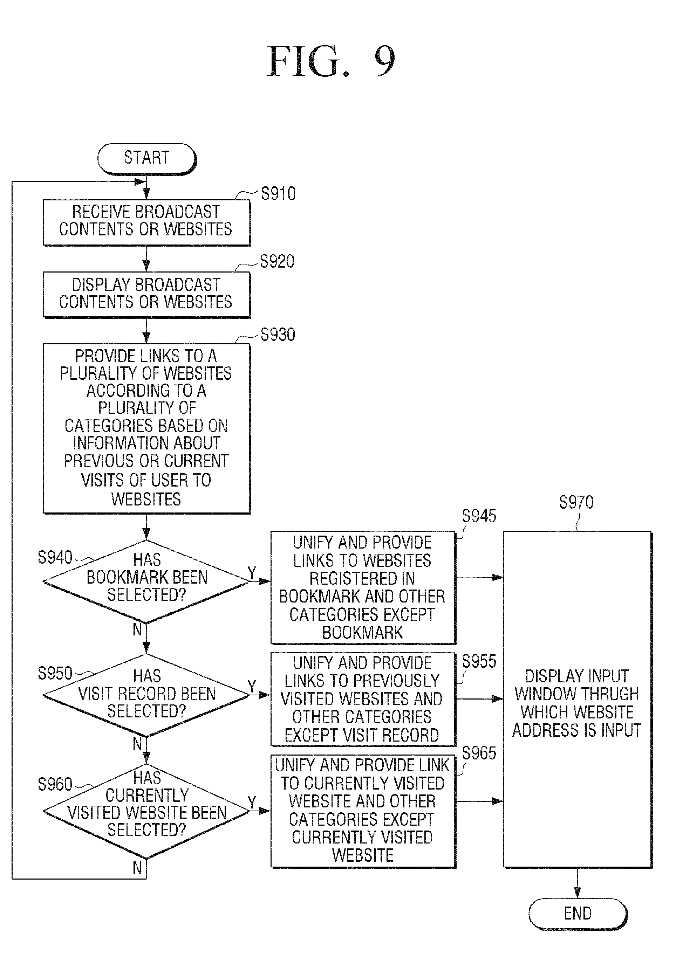

FIG. 8 is a flowchart illustrating a method of providing a website accessing route according to various exemplary embodiments. FIG. 9 is a flowchart illustrating a method of providing a website accessing route according to various exemplary embodiments.

Referring to FIGS. 8 and 9, in operations S810 and 910, broadcast contents or websites are received. In operations S820 and 920, the received broadcast contents or websites are displayed. In operations S830 and 930, links to a plurality of websites are provided according to a plurality of categories based on information about previous or current visits of a user to the websites. If one of the plurality of categories is selected in operation S840, a link to a website corresponding to the selected category is provided in operation S850. If a bookmark is selected in operation S940, links to websites registered in the bookmark and categories other than the bookmark are provided in operation S945. If a visit record is selected in operation S950, links to websites which have been visited and categories other than the visit record are provided in operation S955. If a currently visited website is selected in operation S960, a link to the currently visited website and categories other than the currently visited website are provided in operation S965. The link to the website may be provided in a thumbnail or list form. The link to the website may also be provided in one of date, name, and visit frequency orders. If one of the plurality of categories is selected, an input window for inputting a website address is provided in operation S970.

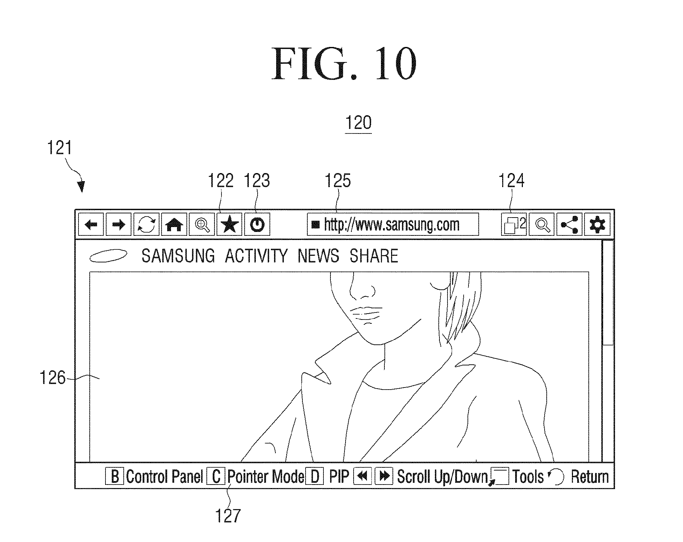

The broadcast receiving apparatus 100, which displays a plurality of categories through a web browser according to various exemplary embodiments, will now be described with reference to FIGS. 10 through 14.

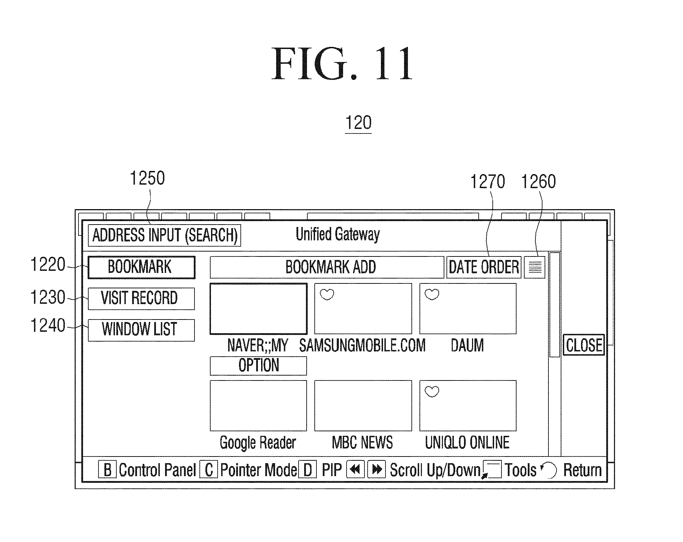

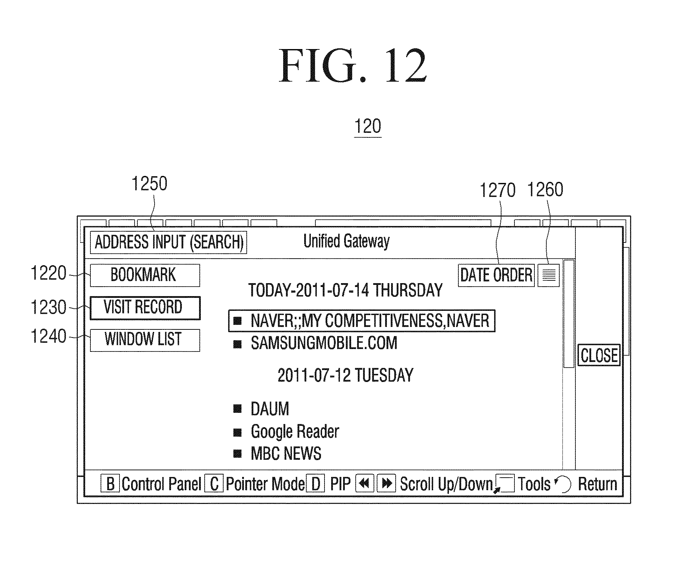

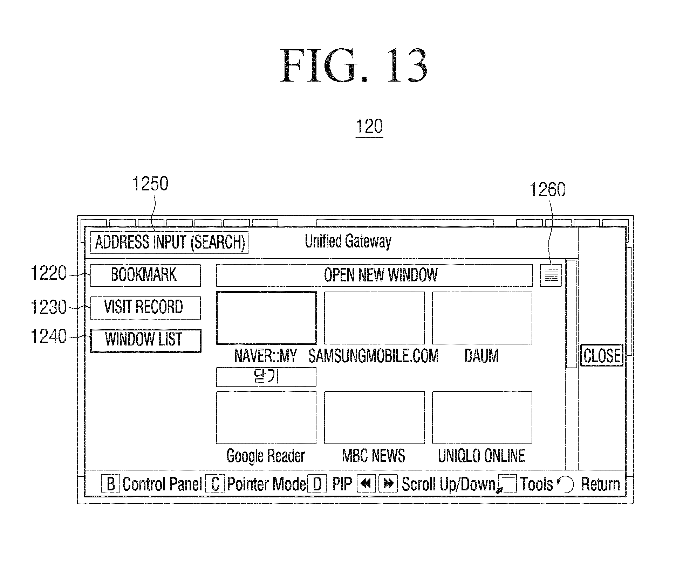

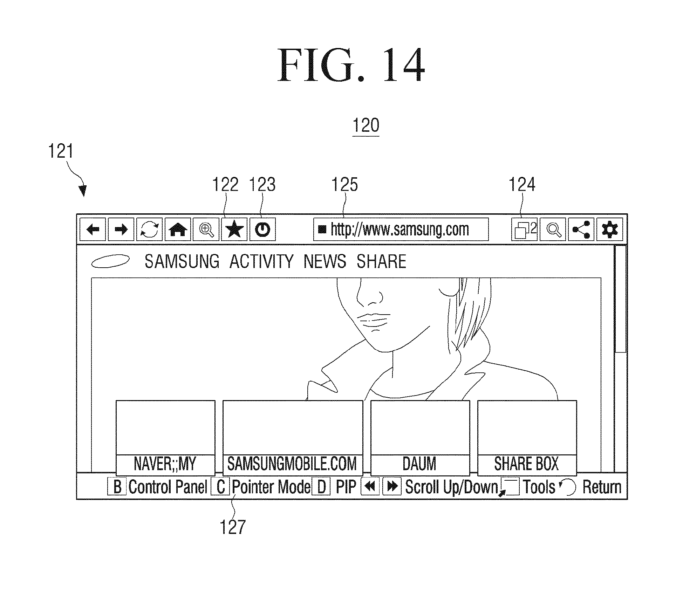

FIG. 10 is a referential view illustrating the screen of the broadcast receiving apparatus 100, which displays a plurality of categories through a web browser according to various exemplary embodiments. FIG. 11 is a referential view illustrating the screen of the broadcast receiving apparatus 100 of FIG. 10, on which a bookmark category is selected. FIG. 12 is a referential view illustrating the screen of the broadcast receiving apparatus 100 of FIG. 10, on which a visit record category is selected. FIG. 13 is a referential view illustrating the screen of the broadcast receiving apparatus 100 of FIG. 10, on which a currently visited website category is selected. FIG. 14 is a referential view illustrating a part of the screen of the broadcast receiving apparatus 100 which displays a list of currently visited websites, according to various exemplary embodiments.

Referring to FIGS. 10 through 14, if a web browser execution command of a user is input, the controlling unit 130 may control the display unit 120 to activate a web browser in order to display the web browser on the screen. If one of a plurality of menu icons on the web browser is selected, the controlling unit 130 may control the display unit 120 to display a list of websites corresponding to the selected menu icon and website accessing menus respectively corresponding to the plurality of menu icons.

The control of the activation of the web browser will now be described. If a command which executes the web browser is input, the controlling unit 130 may store an execution file of the web browser in a random access memory (RAM) in order to force the web browser to stand by when various events occur. The controlling unit 130 generates a video signal and inputs the video signal into the signal processing unit 110 to display the web browser on the screen. The signal processing unit 110 applies an image voltage of the web browser to the LCD panel through the display driving circuit, to display the web browser on the screen.

A web browser 121, which is executed under control of the controlling unit 130 and displayed on the screen through the display unit 120, will now be described with reference to FIG. 10.

The web browser 121 is an element which displays information about a web service provided from an Internet service provider through the communicating unit 150 of the broadcast receiving apparatus 100 on the screen. If a command, which executes the web browser 121 is input, the controlling unit 130 executes the web browser 121 and controls the display unit 120 to display the web browser 121 on the screen. The web browser 121 provides several interfaces in various forms on the screen, to display a web service, with which the user is provided from the Internet service provider. These interfaces may be provided in forms, i.e., menu icons. The menu icons refer to menus which are formed in icon forms. If a menu formed in an icon form is selected, a function of the web browser 21, corresponding to the corresponding menu, is executed.

As shown in FIG. 10, the web browser 121 according to an exemplary embodiment may include a plurality of menu icons 122 and 123 located in upper and lower parts of the screen, an address window 125 for inputting a website address, and a display window 126 for displaying a website.

A menu icon is an element which operates as an interface transmitting a control command to the web browser 121. If the user of the broadcast receiving apparatus 100 selects a menu icon, the controlling unit 130 executes a function of the web browser 121 corresponding to the selected menu icon. The user selects a menu icon by using the above-described method.

The input window 125 is an interface through which a website address of a text form provided from the web browser 121 is input. Since the web service provided from the Internet service provider is achieved based on the website address having the text form, the web browser 121 needs to provide the input window 125. The user directly inputs a text form website address in order to move to a website that the user visits first. An input of a new website may be performed through a remote controller or an additional input unit.

As described above, if one of the plurality of menu icons 122 and 123 on the web browser 121 is selected, the controlling unit 130 may control the display unit 120 to display a list of websites corresponding to the selected menu icon and website accessing menus respectively corresponding to the plurality of menu icons. The menu icon may be one of a bookmark icon 122, a visit record icon 123, and a currently visited website icon 124. The bookmark icon 122 is a menu icon which displays a list of websites registered in a bookmark by the user. The visit record icon 123 is a menu icon which displays a list of websites which have been visited by the user. The currently visited website icon 124 is a menu icon which displays a list of currently visited websites other than a website currently activated on the display unit 120.

If one of these menu icons is selected, the controlling unit 130 may control the display unit 120 to display the list of websites, along with the website accessing menus respectively corresponding to the plurality of menu icons. In other words, if the bookmark icon 122 is selected, the controlling unit 130 may control the display unit 120 to display a list of websites registered in the bookmark, a visit record menu 1230, and a currently visited website menu 1240. If the visit record icon 123 is selected, the controlling unit 130 may control the display unit 120 to display a list of websites which have been visited by the user, a bookmark menu 1220, and the currently visited website menu 1240. If the currently visited website icon 124 is selected, the controlling unit 130 may control the display unit 120 to display a list of currently visited websites, the bookmark menu 1220, and the visit record menu 1230. For example, as shown in FIG. 11, if the bookmark icon 122 on the web browser 121 is selected, websites "www.naver.com", "www.samsungmobile.com", and "www.daum.net" registered in the bookmark by the user are displayed on the screen. Also, website accessing menus corresponding to other menu icons are displayed together. FIG. 12 illustrates the web browser 121 on which the visit record icon 1230 is selected. In this case, the web browser 121 displays a list of websites which have been visited by the user and website accessing menus corresponding to other menu icons together. FIG. 13 illustrates the web browser 121 which displays currently visited websites along with other menu icons. The list of websites displayed on the display unit 120 may be displayed in various forms, i.e., a thumbnail form, a list form, etc.. For example, in FIG. 11, if the bookmark icon 122 on the web browser 121 is selected, a list of websites registered in a bookmark by the user is provided in a thumbnail form. In FIG. 12, if the visit record icon 123 on the web browser 121 is selected, a list of websites which have been visited by the user is provided in a list form. The web browser 121 displays a list of websites in a form desired by the user through a website list display form icon 1260.

The list of websites may be displayed on the web browser 121 in one of date, name, and visit frequency orders. The web browser 121 displays a list of websites in an order desired by the user through a website list display order icon 1270.

Since the broadcast receiving apparatus 100, i.e., the TV does not generally include a character unit text input unit, i.e., a keyboard, it is inconvenient to use a web service through the broadcast receiving apparatus 100. Therefore, according to the embodiments, websites frequently visited by the user, which are visited when browsing a website or in which the user is interested, are stored and are displayed in a list form on a screen. In particular, various website accessing menus are displayed, along with the websites to perform simple and convenient web surfing.

The user directly inputs a text address in order to move to a website that the user visits first. Therefore, as described above, the web browser 121 may provide an input window 1250 for inputting a website address.

If the currently visited website icon 124 is selected, the controlling unit 130 may control the display unit 120 to display a list of currently visited websites on a part of the screen of the display unit 120. In other words, as shown in FIG. 14, if a particular website is visited, the display unit 120 may display a list of currently visited other websites (i.e., websites visited by the web browser 121 which is currently opened through another window or websites visited by tabs on the web browser 121) on a part of the screen. Therefore, the user may check a list of websites that the user is currently visiting at a glance and directly move to a website from which the user wants to be provided with a service. Therefore, the user may conveniently enjoy web surfing through the broadcast receiving apparatus 100.

As described above, according to various exemplary embodiments, links to a plurality of websites are provided according to a plurality of categories based on information about previous or current visits of a user to the websites. Therefore, a user may easily access websites based on text addresses through a broadcast receiving apparatus and may be conveniently provided with a web service from a web server.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims. Many alternatives, modifications, and variations will be apparent to those skilled in the art.

## Claims

1. A broadcast receiving apparatus which accesses websites through a network, the broadcast receiving apparatus comprising:
a signal processing unit which performs signal processing with respect to received broadcast contents;
a communicating unit which communicates with an external server to access the websites;
a display unit which displays the signal processed broadcast contents or the websites; and
a controlling unit which provides links to a plurality of websites regarding a plurality of categories based on information about previous visits or current visits of a user to the websites and, if one of the plurality of categories is selected, provides a link to the website corresponding to the selected category.

2. The broadcast receiving apparatus of claim 1, wherein the plurality of categories comprise a bookmark, a visit record, and a currently visited website.

3. The broadcast receiving apparatus of claim 2, wherein:
if the bookmark is selected, the controlling unit provides links to websites registered in the bookmark, and categories other than the bookmark, together;
if the visit record is selected, the controlling unit provides links to previously visited websites, and categories other than the visit record, together; and
if the currently visited website is selected, the controlling unit provides links to the currently visited websites, and categories other than the currently visited websites, together.

4. The broadcast receiving apparatus of any one of the preceding claims, wherein the links to the websites are provided in a thumbnail form or a list form.

5. The broadcast receiving apparatus of any one of the preceding claims, wherein the links to the websites are provided in one of date, name, and visit frequency orders.

6. The broadcast receiving apparatus of any one of the preceding claims, wherein if one of the plurality of categories is selected, the controlling unit controls to further provide an input window through which a website address is input.

7. A method of providing a website accessing route, the method comprising:
receiving broadcast contents or websites;
displaying the received broadcast contents or websites; and
providing links to a plurality of websites regarding a plurality of categories based on information about previous visits or current visits of a user to the websites and, if one of the plurality of categories is selected, providing a link to the website corresponding to the selected category.

8. The method of claim 7, wherein the plurality of categories comprise a bookmark, a visit record, and a currently visited website.

9. The method of claim 8, wherein the providing of the links to the websites comprises:
if the bookmark is selected, providing links to websites registered in the bookmark, and categories other than the bookmark, together;
if the visit record is selected, providing links to previously visited websites, and categories other than the visit record, together; and
if the currently visited website is selected, providing links to the currently visited websites, and categories other than the currently visited website, together.

10. The method of any one of claims 7 to 9, wherein the links to the websites are provided in a thumbnail form or a list form.

11. The method of any one of claims 7 to 10, wherein the links to the websites are provided in one of date, name, and visit frequency orders.

12. The method of any one of claims 7 to 11, wherein the providing of the links to the websites comprises:
if one of the plurality of categories is selected, further providing an input window through which a website address is input.
